Europäisches Patentamt

European Patent Office

Office européen des brevets

(19)

(11) Veröffentlichungsnummer: **0 543 102 A2**

## (12) EUROPÄISCHE PATENTANMELDUNG

(21) Anmeldenummer: **92115635.2**

(22) Anmeldetag: **12.09.92**

(51) Int. Cl.5: **G06F 15/70**

(30) Priorität: **16.11.91 DE 4137791**

(43) Veröffentlichungstag der Anmeldung:
**26.05.93 Patentblatt 93/21**

(84) Benannte Vertragsstaaten:
**AT BE CH DK ES FR GB GR IT LI LU MC NL PT SE**

(71) Anmelder: **ERNO Raumfahrttechnik Gesellschaft mit beschränkter Haftung Hünefeldstrasse 1-5 W-2800 Bremen 1(DE)**

(72) Erfinder: **Kellner, Albrecht, Dr. Birkenweg 4 W-2833 Kirchseelte(DE)**

(54) Einrichtung zum Stereosehen durch Verarbeitung der Bilddaten zweier CCD-Videokameras.

(57) Die Erfindung bezieht sich auf eine Einrichtung zum Stereosehen durch Verarbeitung der Bilddaten zweier dicht nebeneinander angeordneter und auf die gleiche Szene ausgerichteter CCD-Videokameras. Die Bilddaten der erfaßten Bildpunkte beider CCD-Videokameras werden auf einem als Entfernungsskala wirkenden neuronalen Netz abgebildet, das eine gleichzeitige Identifizierung und Abstandsbestimmung der Bildpunkte erlaubt.

FIG. 1

Rank Xerox (UK) Business Services
(3.10/3.6/3.3.1)

Die Erfindung bezieht sich auf eine Einrichtung zum Stereosehen durch Verarbeitung der Bilddaten zweier dicht nebeneinader angeordneter und auf die gleiche Szene ausgerichteter CCD – Videoka – meras.

Zum maschinelllen Stereosehen ist es not – wendig den Abstand jedes einzelnen Bildpunktes einer mit zwei Videokameras aufgenommenen Szene auf der Basis der zwei Videobilder zu er – mitteln. Die zwei Videokameras müssen dazu dicht nebeneinader angeordnet und auf die gleiche Szene ausgerichtet sein. Das Auswerten der Vi – deobilddaten erfolgt dann durch algorithmisches Verarbeiten dieser Bilddaten, wozu eine große An – zahl sukzessiv durchzuführender Rechenoperatio – nen notwendig ist.

Das algorithmische Verarbeiten der Bilddaten ist mit verschiedenen Verfahren, z.B. dem Verfah – ren nach Henriksen möglich. Das Henriksen – Ver – fahren ist z.B. von Krotkov in "Active Computer Vision by Cooperative Focus and Stereo", Springer Verlag 1989 beschrieben und erfordert sechs, je – weils aus enorm vielen Einzelschritten bestehende Hauptschritte. Ein derart umfangreiches serielles Rechenverfahren ist aber äußerst zeitaufwendig und daher ist maschinelles Stereosehen bisher nur begrenzt einsetzbar.

Der Erfindung liegt daher die Aufgabe zugrun – de, eine Einrichtung zum Stereosehen durch Ver – arbeiten der Bilddaten zweier dicht nebeneinander angeordneter und auf die gleiche Szene ausge – richteter CCD – Videokameras zu schaffen, die bei vertretbarem Aufwand eine hinreichend schnelle Abstandsbestimmung aus den Videobilddaten bei – der Bilder ermöglicht. Diese Aufgabe ist gemäß der Erfindung dadurch gelöst, daß die Bilddaten der erfaßten Bildpunkte beider Videokameras auf einem als Entfernungsskala wirkenden Neuronalen Netz abgebildet sind, und daß das Neuronale Netz die Bilddaten der in einem Punkt der Szene kor – respondierenden beiden Bildpunkte zum Identifi – zieren und Bestimmen des Abstandes dieses Szenenpunktes verarbeitet werden.

Die erfindungsgemäße Maßnahme hat den Vorteil, daß diese Abbildung in hohem Maße pa – rallelisierbar ist und daher gegenüber den kon – ventionellen mit sequentiellen Rechenoperationen arbeitenden Verfahren erheblich schneller durch – geführt werden kann. Die Abbildung wird dabei mit einem Neuronalen Netz realisiert, das aus einer Vielzahl gleichartiger Schaltelemente, den sog. Neuronen besteht, die untereinander Signale aus – tauschen können.

Weiterbildungen und vorteilhafte Ausgestal – tungen der Erfindung sind den Ansprüchen 2 – 20 zu entnehmen.

Die Erfindung wird anhand der beiligenden Zeichnung erläutert. Es zeigen:

Fig. 1    eine Prinzipdarstellung eines Neuro – nalen Netzes zur Definition der Ele – vationsebenen der Neuronenlagen,

Fig. 2    die neuronale Verbindungsstruktur innerhalb einer Elevationsebene,

Fig. 3    ein Symmetrie – Paar von Eingangs – neuronen mit einem Seitenwinkel von Null ˚,

Fig. 4    das Prinzip der Abstandsbetimmung eines Bildpunktes und

Fig. 5.    ein Symmetrie – Paar mit einem Sei – tenwinkel ungleich Null ˚.

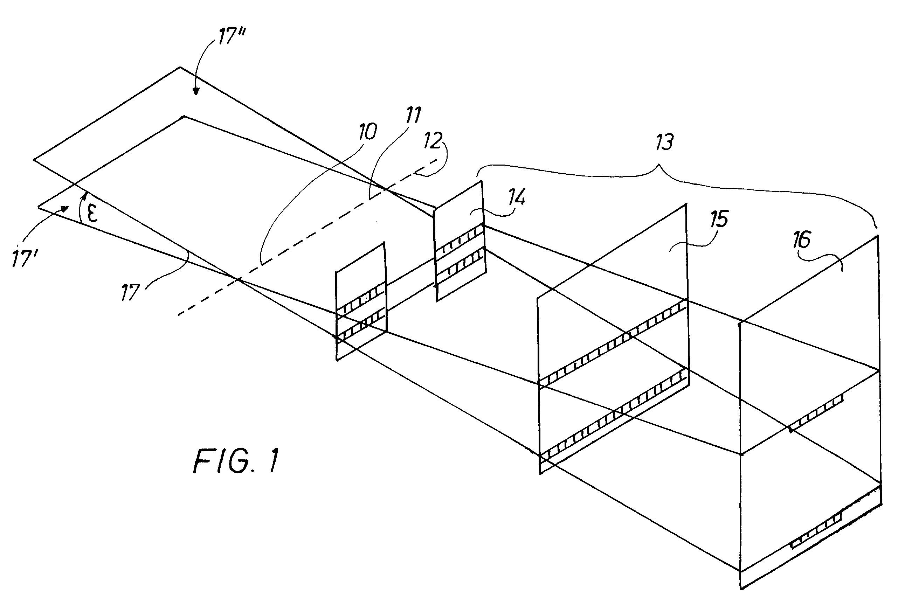

In der Darstellung nach Fig. 1 ist das Prinzip eines Neuronalen Netzes abgebildet, das von den Bilddaten zweier nichtdargestellter CCD – Video – kameras beaufschlagt wird. Die Linsenmittelpunkte 10, 11 der CCD – Kameras liegen dabei auf der gestrichelten Linie 12. Das neuronale Netz 13 be – steht dabei aus einer Lage Eingangsneuronen 14, einer Lage Mittelneuronen 15 und einer Lage Aus – gangsneuronen 16. Zwischen den Neuronen der drei Lagen 14, 15, 16 besteht eine im weiteren Verlauf noch zu erläuternde dreidimensionale Ver – bindungsstruktur, die in zweidimensionale Eleva – tionsebenen 17 aufspaltbar ist. Die Darstellung nach Fig. 1 zeigt die Elevationsebene 17' für den Elevationswinkel $\epsilon$ = 0 ˚ und 17'' für den $\epsilon$ # 0 ˚. Die Elevationsebenen 17 liegen immer auf der die Linsenmittelpunkte 10, 11 verbindenden Linie 12 und nur innerhalb einer Elevationsebene sind die Neuronen miteinander verbunden. Dabei ist die Verbindungsstruktur für die Elevationsebenen identisch.

Neuronale Netze bestehen aus einer Vielzahl gleichartiger Schaltelemente, den sog. Neuronen, welche in der Lage sind, Signale untereinander auszutauschen. Empfängt z.B. ein Neuron der Nummer n Signale der Amplitude $i_k$ von anderen Neuronen, dann bildet dieses Neuron den Netz – eingang aus der Summe der Eingangsamplituden $I_n$ = $\Sigma i_k$. Dieses Netzeingangssignal bestimmt über eine Transferfunktion f mit welcher Ausgangsam – plitude $a_n$ dieses Neuron seinerseits ein Signal aussendet. $a_n$ = f ($I_n$). Die Amplitude mit der die – ses Signal ein weiteres Neuron der Nummer m erreicht, wird durch Multiplikation der Ausgangs – amplitude $a_n$ mit dem synaptischen Gewicht $S_{nm}$ zwischen dem n. und dem m. Neuron bestimmt; $i_m$ = $S_{nm}$ . $a_n$. Die Verteilung dieser Gewichte über das Neuronale Netz, sowie der Typ der Transfer – funktion sind dabei maßgebend für die Funktion des neuronalen Netzes.

Das Neuronale Netz nach Fig. 1 ist dabei durch die Lage 14 der Eingangsneuronen, die Lage 15 der Mittelneuronen und die Lage 16 der Aus – gangsneuronen bestimmt. Jedes Eingangsneuron ist durch die Transferfunktion $f_i$ = $i_d$ definiert und entspricht dabei jeweils einem Bildpunkt im Vi –

deobild der linken bzw. rechten CCD – Kamera und wird vom Grauwert $I_n$ des jeweiligen Bildpunktes beaufschlagt. Die Neuronen der mittleren Lage 15 sind hierbei durch die Transferfunktion $f_m = 1$ für $I_n > s$; sonst $f_m = 0$ definiert mit dem einstellbaren Schwellwert s gemäß nachfolgender Bedingung 1 $>> s > 0$. Für die Neuronen der Ausgangslage 16 gilt dabei folgende Transferfunktion $f_m = 1$ für $I_n > 0$, sonst $f_m = 0$.

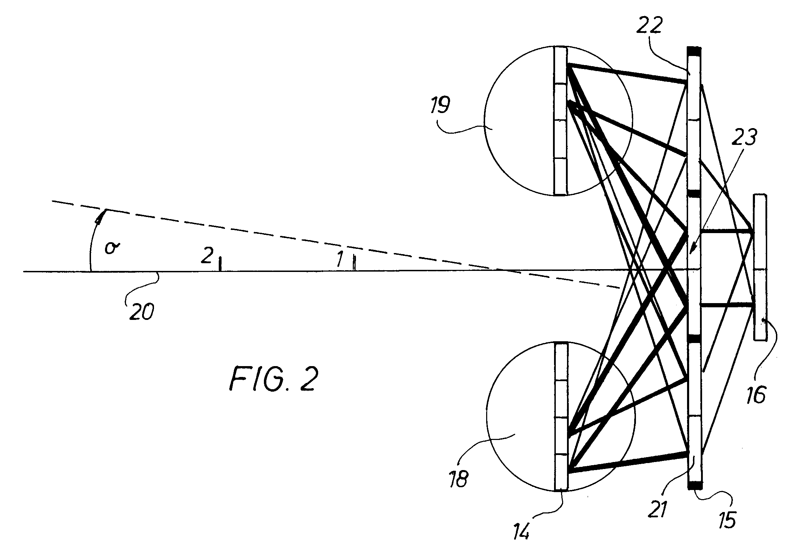

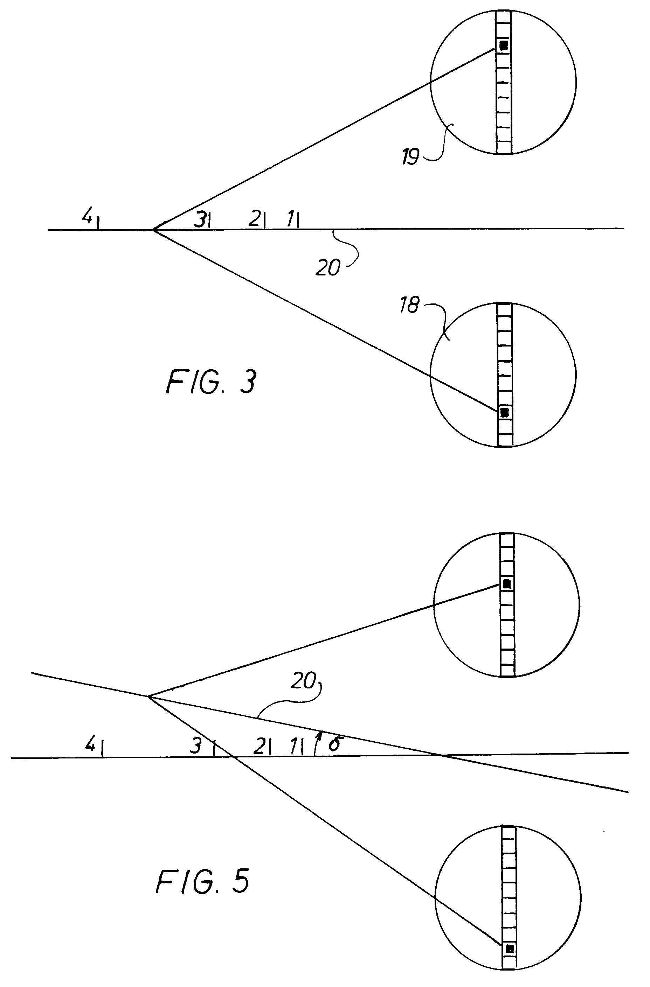

Wie zuvor schon erwähnt, sind die Verbindungsstrukturen für jede Elevationsebene identisch. Fig. 2 zeigt diese Verbindungsstruktur für die Ebene mit dem Elevationswinkel $\epsilon = 0$, und zwar für acht Eingangsneuronen, wobei der Übersicht wegen die Lage der Eingangsneuronen 14 als "Retinas" in den beiden als Kreise angedeuteten CCD – Videokameras 18, 19 dargestellt sind. Charakteristisch für die dortige Verbindungsstruktur ist, daß die Neuronen der mittleren Lage 15 jeweils immer mit den zwei Neuronen eines Symmetrie – Paares der Eingangslage 14 verbunden sind. Ein Symmetrie – Paar besteht hierbei jeweils aus zwei Eingangsneuronen, deren Eingänge von Bildpunkten des linken bzw. rechten Videobildes stammen, die vom Licht des gleichen, auf der Symmetrie – achse 20 der zwei Videokameras liegenden Szenenpunktes getroffen werden. Das Symmetrie – Paar ist in Fig. 3 als Prinzipdarstellung mit dem Seitenwinkel $\sigma = 0°$ dargestellt. Fig. 5 zeigt ein Symmetrie – Paar mit einem Seitenwinkel $\sigma \# 0$.

Die Verbindungsstruktur nach Fig. 2 läßt auch erkennen, daß die mittlere Neuronenlage 15 aus drei Zonen besteht, und zwar einer linken Zone 21 von Vergleichsneuronen, einer rechten Zone 22 von Vergleichszonen und einer zentralen Zone 23 von Transferneuronen. Jedes Symmetrie – Paar der Eingangsneuronen ist hierbei mit jeweils einem Neuron aus jeder dieser drei Zonen 21, 22, 23 verbunden. Die Vergleichsneuronen 21, 22 sind dabei invers geschaltet, d.h. die synaptischen Gewichte zwischen den Eingangsneuronen eines Symmetrie – Paares und den Vergleichsneuronen besitzen jeweils entgegengesetzte Vorzeichen. Dabei betragen sie für die linken Vergleichsneuronen +1 und −1 für das linke bzw. rechte Eingangsneuron und die rechten Vergleichsneuronen −1 und +1 für das linke bzw. das rechte Eingangsneuron. Die Transferneuronen sind dagegen mit den synaptischen Gewichten +1 und −1 mit den Neuronen jedes Symmetrie – Paares verbunden.

Die Verbindungsstruktur zwischen der mittleren Neuronenlage 15 und der Lage 16 der Ausgangsneuronen ist dabei derart gestaltet, daß jeweils ein Neuron der Transferzone 23 über eine nichtinverse synaptiche Verbindung des Gewichtes +1 mit jeweils einem Neuron der Ausgangslage 16 verbunden ist. Weiterhin ist jeweils ein Neuron der Vergleichszonen 21, 22 über eine inverse synaptische Verbindung des Gewichtes −1 mit jeweils einem Neuron der Ausgangslage 16 verbunden. In der Darstellung nach Fig. 2 sind nichtinverse Verbindungen mit starken Linien dargetellt, während inverse Verbindungen als dünne Linien gezeichnet sind.

Die Wirkungsweise dieses Neuronalen Netzes ist dadurch gekennzeichnet, daß bei jeder beliebigen Elevationsebene mit dem Elevationswinkel $\epsilon$ für jede Szene nur ein Neuron der Ausgangslage 16 dieser Elevationsebene aktiviert wird. Diesem Neuron kann daher eindeutig der Abstand des Szenenpunktes zugeordnet werden, dessen Richtung durch den Seitenwinkel $\sigma$ und den Elevationswinkel $\epsilon$ definiert ist. Die Lage der Ausgangsneuronen bildet hierbei eine Entfernungsskala für diesen Szenenpunkt und zu einem vorgegebenen Seitenwinkel $\sigma$ erhält man somit gleichzeitig die Abstandwerte aller diesem Seitenwinkel $\sigma$ zugeordneten Szenenpunkte.

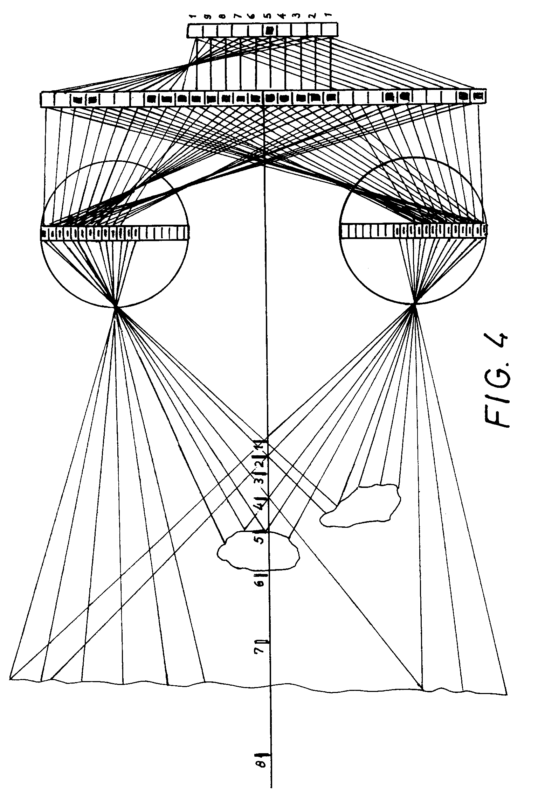

In Fig. 4 ist dieses Ergebnis für den Fall des Seitenwinkels $\sigma = 0°$ und des Elevationswinkels $\epsilon = 0°$ dargestellt. Die aktivierten Neuronen der 3 Ebenen sind schwarz gezeichnet. Um die Abstandswerte für alle Seitenwinkel zu bekommen, muß die Einrichtung, bestehend aus den zwei starr verbundenen CCD – Kameras, durch den interessierenden Winkelbereich seitlich geschwenkt werden. Die Anzahl N der Neuronen dieses neuronales Netzes ist hierbei wie folgt gegeben.

$N = 3 \cdot n^2$, wobei $n^2$ die

Anzahl der Bildpunkte des einzelnen Videobildes angibt. Die Anzahl s der synaptischen Verbindungen ist

$s = 9/2 \, n$.

Eine weitere Möglichkeit, auf ein Schwenken der Kameras zu verzichten ist dadurch gegeben, daß für jeden Seitenwinkel $\sigma$ ein weiteres neuronales Netz vorgesehen wird, daß exakt die gleiche Struktur hat wie im Zusammenhang mit Fig. 1 und Fig. 2 definiert, mit dem einzigen Unterschied, daß die Definition des Symmetrie – Paares abgeändert wird:
Beim vorgegebenen Seitenwinkel $\sigma$ besteht ein Symmetrie – Paar aus zwei Eingangsneuronen, deren Eingänge von den Bildpunkten des linken bzw. rechten Videobildes stammen, die vom Licht des gleichen Szenenpunktes getroffen werden, der auf einer Sichtlinie mit dem Seitenwinkel $\sigma$ liegt (Fig. 5). Die Anzahl der Neuronen bzw. synaptischer Verbindungen liegt bei dieser Erweiterung bei

$N = 3 \cdot n^3$, bzw. $S = 9/2\ n^2$.

Eine zusätzliche Variante des Verfahrens besteht darin, daß die Eingangsneuronen nicht mit den Grauwerten der Bildpunkte beaufschlagt werden, sondern mit einem Bildmerkmal (z.B. einer Linie bestimmter Orientierung oder einer Linie bestimmter Farbe) deren Teil der Bildpunkt ist. In diesem Fall ist statt der Grauwertbestimmung eine Merkmalsextraktion als Vorverarbeitung durchzuführen.

Während Neuronale Netze hauptsächlich auf normalen Rechnern mit Monoprozessoren implementiert werden, liegt die Zukunft von Neuronalen Netzen in ihrer Realisierung auf sog. Neurocomputern, in denen die Neuronen als einzelne, miteinander verschaltete Schaltelemente ausgebildet sind. Damit kann eine hohe Parallelisierung der einzelnen Schaltvorgänge erreicht werden, wodurch ein extrem hoher Geschwindigkeitszuwachs bei kompakten Rechnervolumen erreichbar wird. Im Prinzip können alle Neuronen einer Neuronenlage gleichzeitig wirken, nur die Operationen der Lagen muß sequentiell erfolgen. Damit kann die Tiefenextraktion des vorgeschlagenen Verfahrens im Idealfall in zwei Arbeitszyklen (von der Eingangslage zu mittleren Lage und von der mittleren Lage zur Ausgangslage) erfolgen. Dabei beinhaltet die zuvor angegebene Verschaltung die synaptischen Gewichte und damit die Essenz der Funktionsweise des Neuronalen Netzes. Die Funktionsweise dieses Neuronalen Netzes ist somit in einer speziellen Verschaltung bzw. Hardware-Konfiguration der Einrichtung realisiert.

Ein Neurocomputer mit einer inneren Verschaltung, die der zuvor angegebenen Struktur des Neuronalen Netzes entspricht, ist daher eine spezielle elektronische Vorrichtung zum maschinellen Stereosehen, d.h. ein "Neurochip zum Stereosehen".

### Bezugszahlen

| | |
|---|---|
| 10 | Linsenbrennpunkt |
| 11 | Linsenbrennpunkt |
| 12 | Linie |
| 13 | neuronales Netz |
| 14 | Lage der Eingangsneuron |
| 15 | Lage der Mittelneuronen |
| 16 | Lage der Ausgangsneuronen |
| 17 | Elevationsebene |
| 18 | CCD-Videokamera |
| 19 | CCD-Videokamera |
| 20 | Symmetrieachse |
| 21 | linke Zone Vergleichsneuronen |
| 22 | rechte Zone Vergleichsneuronen |
| 23 | zentrale Zone von Transferneuronen |

### Patentansprüche

1. Einrichtung zum Stereosehen durch Verarbeitung der Bilddaten zweier dicht nebeneinander angeordneter und auf die gleiche Szene ausgerichteter CCD-Videokameras, dadurch gekennzeichnet, daß die Bilddaten der Bildpunkte beider Videokameras (18, 19) auf einem als Entfernungsskala wirkenden Neuronalen Netz (13) abgebildet sind, und daß das Neuronale Netz (13) die Bilddaten der in einem Punkt der Szene korrespondierenden beiden Bildpunkte zum Identifizieren und Bestimmen des Abstandes dieses Szenenpunktes verarbeitet werden.

2. Einrichtung nach Einspruch 1, dadurch gekennzeichnet, daß das Neuronale Netz (13) aus einer Lage (14) Eingangsneuronen, einer Lage (15) Mittelneuronen und einer Lage (16) Ausgangsneuronen besteht, und daß die Neuronen der drei Lagen über eine dreidimensionale Verbindungsstruktur untereinander verbunden sind.

3. Einrichtung nach Anspruch 1 oder 2, dadurch gekennzeichnet, daß die Funktionen der von einem Bildpunkt im Videobild der linken bzw. rechten CCD- Videokamera (18, 19) aktivierbaren Eingangsneuronen (14) durch eine bestimmte Transferfunktion definierbar ist.

4. Einrichtung nach Anspruch 1 oder 2, dadurch gekennzeichnet, daß die Funktionen der aktivierbaren Mittelneuronen (15) durch eine von einem einstellbaren Schwellwert abhängige Transferfunktion bestimmbar ist.

5. Einrichtung nach Anspruch 1 oder 2, dadurch gekennzeichnet, daß die Funktionen der aktivierbaren Ausgangsneuronen (16) durch eine von einem einstellbaren Schwellwert abhängige Transferfunktion definierbar ist.

6. Einrichtung nach einem der Ansprüche 1 bis 5, dadurch gekennzeichnet, daß die dreidimensionale Verbindungsstruktur zwischen den Eingangsneuronen (14), den Mittelneuronen (15) und den Ausgangsneuronen (16) aus zweidimensionalen Elevationsebenen (17) besteht, und daß die innerhalb einer Elevationsebene (17) miteinander verbundenen Neuronen für jede Elevationsebene (17) eine identische Verbindungsstruktur aufweisen.

7. Einrichtung nach einem der Ansprüche 1 bis 6, dadurch gekennzeichnet, daß die Verbindungsstruktur zwischen Mittelneuronen (15) und Eingangsneuronen (14) jeweils ein Neuron der Mittellage mit symmetrisch liegenden Neuronen der Eingangslage (Symmetrie – Paar) verbindet.

8. Einrichtung nach einem der Ansprüche 1 bis 7, dadurch gekennzeichnet, daß die Neuronen der Mittellage (15) jeweils aus einer linken und einer rechten Zone von Vergleichsneuronen sowie einer zentralen Zone von Transferneu – ronen besteht, und daß jedes Symmetrie – Paar der Eingangsneuronen (14) mit jeweils einem Neuron jeder Zone verbunden ist.

9. Einrichtung nach einem der Ansprüche 1 bis 8, dadurch gekennzeichnet, daß die synaptischen Gewichte zwischen den Vergleichsneuronen und den Eingangsneuronen eines Symmetrie – Paares jeweils gleichen Betrag aber entge – gengesetzte Vorzeichen besitzen.

10. Einrichtung nach einem der Ansprüche 1 bis 9, dadurch gekennzeichnet, daß die synaptischen Gewichte für die linken Vergleichsneuronen positiv bzw. negativ für das linke bzw. rechte Eingangsneuron und für die rechten Ver – gleichsneuronen negativ bzw. positiv für das linke bzw. rechte Eingangsneuron sind.

11. Einrichtung nach einem der Ansprüche 1 bis 10, dadurch gekennzeichnet, daß die synapti – schen Gewichte der Transferneuronen jeweils mit gleichem, insbesondere positivem Gewicht, an die Neuronen jedes Symmetrie – Paares angeschlossen sind.

12. Einrichtung nach einem der Ansprüche 1 bis 11, dadurch gekennzeichnet, daß die Verbin – dungsstruktur von der mittleren Neuronenlage (15) zu den Ausgangsneuronen (16) jeweils ein Neuron der Transferzone mit positivem syn – aptischen Gewicht und jeweils ein Neuron der Vergleichszonen über eine synaptische Ver – bindung mit negativem Gewicht zu einem Ausgangsneuron schaltet.

13. Einrichtung nach einem der Ansprüche 1 bis 12, dadurch gekennzeichnet, daß für jeden Elevationswinkel ($\epsilon$) in der zugehörigen Eleva – tionsebene (17) der abbildbaren Szene ein Ausgangsneuron der zugeordneten Eleva – tionsebene (17) aktivierbar ist, und daß dieses Neuron den Abstand des Szenenpunktes durch die Richtung eines Seitenwinkels ($\sigma$) und des Elevationswinkel ($\epsilon$) eindeutig definiert.

14. Einrichtung nach einem der Ansprüche 1 bis 13, dadurch gekennzeichnet, daß die zwei CCD – Videokameras (18, 19) auf einem ge – meinsamen Stativ starr miteinander verbunden sind, und daß das Stativ zum Einstellen des Seitenwinkels ($\sigma$) schwenkbar ausgebildet ist.

15. Einrichtung nach einem der Ansprüche 1 bis 14, dadurch gekennzeichnet, daß das Neuro – nale Netz (13) durch weitere Neuronale Netze jeweils zum Erfassen eines Seitenwinkels ($\sigma$) erweiterbar ist, und daß die Symmetrie – Paare dieser Neuronalen Netze aus zwei Eingangs – neuronen bestehen, deren Eingänge von Bildpunkten des rechten bzw. linken Videobil – des aktivierbar sind die vom Licht des gleichen Szenenpunktes der auf einer mit dem zu er – fassenden Seitenwinkel ($\sigma$) zusammenfallenden Sichtlinie liegt.

16. Einrichtung nach einem der Ansprüche 1 bis 15, dadurch gekennzeichnet, daß die Ein – gangsneuronen (14) mit den Helligkeitsdaten (Grauwerte) der CCD – Videokameras (18, 19) beaufschlagt werden.

17. Einrichtung nach einem der Ansprüche 1 bis 16, dadurch gekennzeichnet, daß die Ein – gangsneuronen (14) mit Daten bestimmter Bildmerkmale (Linien, Linien bestimmter Orientierung, Farben) durch eine vorangehen – de Datenverarbeitung zur Merkmalsextraktion beaufschlagt werden.

18. Einrichtung nach einem der Ansprüche 1 bis 17, dadurch gekennzeichnet, daß für das Neuronale Netz (13) ein herrkömmlicher mit Monoprozessoren implementierter Rechner eingesetzt ist.

19. Einrichtung nach einem der Ansprüche 1 bis 18, dadurch gekennzeichnet, daß für das Neuronale Netz (13) Neurocomputer eingesetzt sind, deren Neuronen als einzelne miteinander verschaltete Schaltbausteine ausgebildet sind.

20. Einrichtung nach einem der vorhergehenden Ansprüche, dadurch gekennzeichnet, daß die CCD – Videokameras (18, 19) durch Kamera – systeme ersetzt sind, die in der Lage sind Szenenbilder zum Aktivieren der Eingangs – neuronen (14) Neuronaler Netze (13) zu zer – legen.

FIG. 1

FIG. 2

EP 0 543 102 A2

FIG. 3

FIG. 5

FIG. 4